# EUROPEAN PATENT APPLICATION

(11) **EP 4 848 350 A1**
(43) Date of publication of application: **02.12.2026**
(21) Application number: 25895705.9
(22) Date of filing: 21.11.2025
(51) Int. Cl.: H01M 4/13, H01M 4/62, H01M 10/052, H01M 4/139, H01M 4/04, H01M 4/02

(54) **DRY ELECTRODE AND MANUFACTURING METHOD THEREOF**

(30) Priority: 22.11.2024 KR 20240168749
(71) Applicant: LG Chem, Ltd., Seoul 07336 (KR)
(72) Inventor: LEE, Tae-Hee, Seoul 07796 (KR); MUN, Sung Cik, Seoul 07796 (KR); PARK, Woo-Bin, Seoul 07796 (KR); SHIN, Jeong-Min, Seoul 07796 (KR); HAN, Sung-Jae, Seoul 07796 (KR)
(74) Representative: Hoffmann Eitle
(86) International application number: PCT/KR2025/019480
(87) International publication number: WO 2026/111509

(57) **Abstract**

A dry electrode according to the present disclosure comprises a first binder polymer which is a fibrillated polymer including polytetrafluoroethylene, and a second binder polymer having a complex viscosity of 1 Pa·s to 1500 Pa·s at 170°C and 0.1 Hz, and ensures sufficient tensile strength and has improved indentation stiffness such as elastic indentation modulus and indentation hardness.

## Description

### TECHNICAL FIELD

The present disclosure relates to a dry electrode and a method for manufacturing the same.

This application is based on and claims priority from Korean Patent Application No. 10-2024-0168749 filed on November 22, 2024 with the Korean Intellectual Property Office, the disclosure of which is incorporated herein by reference in its entirety.

### BACKGROUND ART

Due to the increasing use of fossil fuels, there is a growing demand for the use of alternative energy and clean energy, and in such circumstances, many studies are being made in the field of energy generation and storage using electrochemistry.

Currently, a representative example of electrochemical devices using electrical and chemical energy is secondary batteries, and the range of applications of secondary batteries is gradually expanding.

One of typical secondary batteries, lithium secondary batteries are used as not only an energy source of mobile devices but also a power source of electric vehicles and hybrid electric vehicles serving as an alternative to vehicles using fossil fuels such as gasoline vehicles and diesel vehicles that are regarded as one of the main causes of air pollution, and the range of applications of lithium secondary batteries is expanding to an auxiliary power source through a grid.

The process of lithium secondary battery manufacturing is largely classified into an electrode process, an assembly process and a formation/ageing process. The electrode process is sub-classified into an active material mixing process, an electrode coating process, a drying process, a rolling process, a slitting process and a winding process.

The active material mixing process is a process of mixing coating materials for forming an electrode active layer where electrochemical reaction actually occurs in the electrode, and specifically, involves mixing an electrode active material which is an essential element of the electrode with an additive, for example, a conductive material, a filler, a binder for binding powder particles and adhesion to a current collector and a solvent for imparting viscosity and dispersing the powder to prepare a flowable slurry.

The mixture composition for forming the electrode active layer is referred to as an electrode mixture in a broad sense.

Subsequently, the electrode coating process of applying the electrode mixture to the current collector having electrical conductivity is performed, followed by the drying process to remove the solvent from the electrode mixture, and additionally, rolling is performed to manufacture the electrode with a predetermined thickness.

Meanwhile, as the solvent contained in the electrode mixture evaporates during drying, defects such as pinholes or cracks may occur in the electrode active layer. Additionally, the active layer is not evenly dried all over the entire inner/outer area, and due to a difference in solvent evaporation rate, some regions get dry earlier and the powder at the corresponding regions floats, and some other regions get dry later at a time interval, resulting in low quality of the electrode.

Recently, many studies are being conducted to manufacture dry electrodes that do not use solvents.

A dry electrode is generally manufactured by laminating, on a current collector, a free-standing film comprising an active material, a fibrillable binder polymer and a conductive material.

However, when the fibrillable binder polymer is used to manufacture the dry electrode, the dry electrode has very low indentation stiffness, and a secondary battery comprising the same reduces in cycle life and capacity retention and increases in resistance.

Accordingly, there is an urgent need for development of dry electrode manufacturing technology for solving the above-described problems.

### DISCLOSURE

### Technical Problem

The present disclosure is directed to providing a dry electrode with improved indentation stiffness, cycle life, capacity retention and resistance manufactured by binder polymer fibrillation.

### Technical Solution

An aspect of the present disclosure provides a dry electrode of the following embodiments and a method for manufacturing the same. Another aspect of the present disclosure provides a secondary battery comprising the dry electrode.

The dry electrode according to a first embodiment comprises:
an electrode current collector; and an electrode active material layer disposed on at least one surface of the electrode current collector,
wherein the electrode active material layer comprises an electrode active material, a conductive material, a first binder polymer and a second binder polymer,
wherein the first binder polymer is a fibrillated polymer including polytetrafluoroethylene, and
wherein the second binder polymer has a complex viscosity of 1 Pa·s to 1500 Pa·s at 170°C and 0.1 Hz.

According to a second embodiment, in the first embodiment,
the second binder polymer may have the complex viscosity of 1 Pa·s to 1000 Pa·s at 170°C and 0.1 Hz.

According to a third embodiment, in the first or second embodiment,
the second binder polymer may have an average particle size (D50) of 50 µm or less.

According to a fourth embodiment, in any one of the first to third embodiments,
the second binder polymer may have an average particle size (D50) of 0.1 µm to 50 µm.

According to a fifth embodiment, in any one of the first to fourth embodiments,
the second binder polymer may have a melt index of 100 g/10 min or more under 2.16 kg load at 230°C.

According to a sixth embodiment, in any one of the first to fifth embodiments,
the first binder polymer and the second binder polymer may be included in an amount of 1 to 5 parts by weight based on total 100 parts by weight of the electrode active material layer.

According to a seventh embodiment, in any one of the first to sixth embodiments,
a weight ratio of the first binder polymer to the second binder polymer may be 6:1 to 2:1.

According to an eighth embodiment, in any one of the first to seventh embodiments,
the second binder polymer may include at least one of a polyolefin-based polymer or a polyvinylidene fluoride-based polymer.

According to a ninth embodiment, in any one of the first to eighth embodiments,
the second binder polymer may include polypropylene or polyvinylidene fluoride.

According to a tenth embodiment, in any one of the first to ninth embodiments,
the dry electrode may have a tensile strength of 30 gf/mm² or more.

According to an eleventh embodiment, in any one of the first to tenth embodiments,
an elastic indentation modulus may be 3 GPa or more.

A secondary battery according to a twelfth embodiment comprises:
a positive electrode; a negative electrode; a separator positioned between the positive electrode and the negative electrode; and an electrolyte solution,
wherein at least one of the positive electrode and the negative electrode is the dry electrode according to any one of the first to eleventh embodiments.

A dry electrode manufacturing method according to a thirteenth embodiment comprises:
(S1) dry-mixing an electrode active material, a conductive material, a first binder polymer and a second binder polymer without a solvent to obtain a mixture;
(S2) kneading the mixture to form a mixture mass;
(S3) milling the mixture mass to obtain an electrode mixture powder;
(S4) feeding the electrode mixture powder between a plurality of rolls to perform calendering to manufacture an electrode sheet; and
(S5) laminating the electrode sheet on at least one surface of an electrode current collector to manufacture an electrode,

wherein the first binder polymer includes polytetrafluoroethylene, and
wherein the second binder polymer has a complex viscosity of 1 Pa·s to 1500 Pa·s at 170°C and 0.1 Hz.

### Advantageous Effects

The dry electrode according to an aspect of the present disclosure comprises the fibrillable binder polymer and the binder polymer having the complex viscosity of 1 Pa·s to 1500 Pa·s at 170°C and 0.1 Hz, leading to improved indentation stiffness.

Specifically, the dry electrode has the improved elastic indentation modulus. Furthermore, the dry electrode has the improved indentation hardness.

### BEST MODE

Hereinafter, the present disclosure will be described in detail with reference to the embodiments described herein. The terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms properly for the best explanation.

Accordingly, the embodiments described herein are provided to describe the present disclosure by way of example but not intended to be limiting, so it should be understood that many other equivalents and modifications could be made thereto at the time the application was filed.

It should be further understood that "include", "comprise" or "have" when used in the specification, specifies the presence of the stated elements and does not preclude the presence or addition of one or more other elements unless expressly stated otherwise.

Additionally, the terms 'about' and 'substantially' are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, 'A and/or B' refers to either A or B or both.

Unless specified otherwise, the temperature as used herein refers to Celsius scale of temperature, and its unit is °C.

In this specification, "particle size Dn" refers to a particle size at n% point of cumulative volume particle size distribution. That is, D50 refers to a particle size at 50% point of cumulative volume particle size distribution, D90 refers to a particle size at 90% point of cumulative volume particle size distribution, and D10 refers to a particle size at 10% point of cumulative volume particle size distribution. The Dn may be measured using a laser diffraction method. Specifically, after a powder is dispersed in a dispersion medium and introduced into a commercially available laser diffraction particle size measuring instrument (for example, Malvern; mastersizer 3000), the particle size distribution is calculated by measuring a diffraction pattern difference as a function of particle size when particles pass through a laser beam. The D10, D50 and D90 may be measured by calculating particle diameters at 10%, 50% and 90% points of the cumulative volume particle size distribution in the measuring instrument.

In this specification, unless specified otherwise, the complex viscosity is measured using Advanced Rheometric Expansion System (ARES-G2) at 170°C with a gradual change of frequency from 0.01 Hz to 100 Hz. In addition, the complex viscosity is measured in the strain range (between 1% and 10%) in which polymers exhibit linear viscoelastic properties depending on the viscosity of each polymer.

Unless specified otherwise, the melt index or melt flow index (MFI) is measured under the conditions of 230°C and 2.16 kg in accordance with ASTM D-1238.

A first aspect of the present disclosure relates to a dry electrode.

The dry electrode according to an aspect of the present disclosure comprises:
an electrode current collector; and an electrode active material layer disposed on at least one surface of the electrode current collector,
wherein the electrode active material layer comprises an electrode active material, a conductive material, a first binder polymer and a second binder polymer, and
wherein the first binder polymer is a fibrillated polymer including polytetrafluoroethylene (PTFE), and
wherein the second binder polymer has the complex viscosity of 1 Pa·s to 1500 Pa·s at 170°C and 0.1 Hz.

The electrode active material layer for the dry electrode generally uses a fibrillable binder polymer and has a structure in which the fibrillated binder polymer holds the active material and the conductive material together. The fibrillated polymer improves the flexibility of the electrode active material layer and the electrode due to its high elongation advantage in the length direction. However, the dry electrode manufactured using the fibrillable binder polymer has very low indentation stiffness.

To improve indentation stiffness, the present disclosure applies both the fibrillable binder polymer and the binder polymer having the complex viscosity of 1 Pa·s to 1500 Pa·s at 170°C and 0.1 Hz to the electrode active material layer.

In an embodiment of the present disclosure, the electrode current collector is not limited to a particular one and may include those having high conductivity without causing a chemical change in the corresponding battery. For example, the current collector may include stainless steel, aluminum, nickel, titanium, calcined carbon, copper, or aluminum or stainless steel treated with carbon, nickel, titanium or silver on the surface. The current collector may have a microtextured surface to increase the adhesion strength of the active material, and may come in different forms, for example, a film, a sheet, a foil, a net, a porous body, a foam or a non-woven fabric. Meanwhile, in an embodiment of the present disclosure, the current collector may be 10 µm to 50 µm in thickness, but the thickness is not limited to a particular range. The current collector may be, for example, 10 µm to 20 µm in thickness.

In an embodiment of the present disclosure, the electrode active material may be a positive electrode active material or a negative electrode active material. The positive electrode active material may include any type of lithium transition metal oxide, lithium metal iron phosphate or metal oxide without limitation, and for example, may include layered compounds such as lithium cobalt oxide (LiCoO₂) or lithium nickel oxide (LiNiO₂) or compounds substituted with one or more transition metals; lithium manganese oxide such as Chemical Formula Li₁₊ₓMn₂₋ₓO₄ (x is 0 to 0.33), LiMnO₃, LiMn₂O₃, LiMnO₂; lithium copper oxide (Li₂CuO₂); vanadium oxide such as LiV₃O₈, V₂O₅, Cu₂V₂O₇; Ni-site type lithium nickel oxide represented by Chemical Formula LiNi₁₋ₓMₓO₂ (M = Co, Mn, Al, Cu, Fe, Mg, B or Ga, x = 0.01 to 0.3); lithium manganese composite oxide represented by Chemical Formula LiMn₂₋ₓMₓO₂ (M = Co, Ni, Fe, Cr, Zn or Ta, x = 0.01 to 0.1) or Li₂Mn₃MO₈ (M = Fe, Co, Ni, Cu or Zn); LiMn₂O₄ with partial substitution of alkali earth metal ions for Li in Chemical Formula; lithium metal phosphate LiMPO₄ (M = Fe, Co, Ni or Mn), LiNi_{1-x-y-z}CoₓM1_{y}M2_{z}O₂ (each of M1 and M2 is any one selected from the group consisting of Al, Ni, Fe, Mn, V, Cr, Ti, W, Ta, Mg and Mo independently of each other, x, y and z denote the atomic fraction of the elements in the oxide independently of each other, 0<x<0.5, 0<y<0.5, 0<z<0.5, 0<x+y+z≤1), disulfide compounds; or Fe₂(MoO₄)₃, but is not limited thereto.

The negative electrode active material may include carbon such as non-graphitizing carbon or graphite-based carbon; metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, Group 2 and Group 3 elements in the periodic table, halogen; 0≤x≤1; 1≤y≤3; 1≤z≤8); lithium metals; lithium alloys; silicon-based alloys; tin-based alloys; silicon-based oxide such as SiO, SiO/C, SiO₂; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni based materials.

According to an embodiment of the present disclosure, specifically, the electrode active material may be a positive electrode active material, and more specifically, may include lithium transition metal oxide, lithium nickel-manganese-cobalt oxide, Al or other transition metal-substituted lithium nickel-manganese-cobalt oxide, or lithium iron phosphate.

In an embodiment of the present disclosure, the conductive material is not limited to a particular type and may include any material having conductivity without causing a chemical change in the corresponding battery. Non-limiting examples of the conductive material may include graphite such as natural graphite or artificial graphite; carbon black-based carbon compounds such as carbon black, acetylene black, Ketjen black, channel black, furnace black, lamp black or thermal black; conductive fibers such as carbon fibers or metal fibers; fluoro carbon; metal powder such as aluminum powder or nickel powder; carbon nanotubes; conductive whiskers such as zinc oxide whiskers or potassium titanate whiskers; conductive metal oxide such as titanium oxide; or conductive materials such as polyphenylene derivatives. In a specific embodiment, the conductive material may include one or two or more selected from them.

In an embodiment of the present disclosure, the first binder polymer and the second binder polymer may be included in an amount of 1 to 5 parts by weight based on total 100 parts by weight of the electrode active material layer. When the amount of the binder polymer falls within the aforementioned range, strong adhesion strength may be formed between the components of the electrode active material layer.

In an embodiment of the present disclosure, the first binder polymer and the second binder polymer may be included at a weight ratio of 6:1 to 2:1, 5:1 to 2:1, 6:1 to 3:1, 5:1 to 3:1, or 4:1 to 3:1. When the first binder polymer and the second binder polymer are included at the aforementioned weight ratio, the indentation stiffness of the dry electrode may be significantly improved.

In an embodiment of the present disclosure, the average particle size D50 of the second binder polymer may be 50 µm or less, 45 µm or less, 40 µm or less, 35 µm or less, 30 µm or less, 25 µm or less, 20 µm or less, or 15 µm or less, and may be 0.1 µm or more, or 0.2 µm or more. When the average particle size of the second binder polymer falls within the aforementioned range, the indentation stiffness of the electrode active material layer may be significantly improved, and good dispersion may ensure even distribution within the electrode active material layer.

In an embodiment of the present disclosure, the complex viscosity of the second binder polymer may be 1500 Pa·s or less, 1000 Pa·s or less, 500 Pa·s or less, 300 Pa·s or less, 144 Pa·s or less, or 70 Pa·s or less, and may be 0.1 Pa·s or more, 0.5 Pa·s or more, 1 Pa·s or more, 3 Pa·s or more, 5 Pa·s or more, 10 Pa·s or more, or 18 Pa·s or more, at 170°C and 0.1 Hz. For example, the complex viscosity of the second binder polymer may be 0.1 to 1500 Pa·s, 1 to 1000 Pa·s, 3 to 500 Pa·s, 5 to 300 Pa·s, 10 to 300 Pa·s, or 18 to 144 Pa·s at 170°C and 0.1 Hz.

When the second binder polymer has the aforementioned range of complex viscosity, high fluidity and dispersability may ensure miscibility with the conductive material and the electrode active material in solvent-free environments. Accordingly, the electrode comprising the second binder polymer may have the improved indentation stiffness such as elastic indentation modulus and indentation hardness, and ensure proper life characteristics and discharge capacity characteristics of the secondary battery.

In an embodiment of the present disclosure, the melt index of the second binder polymer under a load of 2.16 kg at 230°C may be 100 g/10 min or more, 200 g/10 min or more, 300 g/10 min or more, 400 g/10 min or more, 500 g/10 min or more, 600 g/10 min or more, 700 g/10 min or more, 800 g/10 min or more, 900 g/10 min or more, 1000 g/10 min or more, 1300 g/10 min or more, or 1500 g/10 min or more. When the melt index of the second binder polymer falls within the aforementioned range, the indentation stiffness of the electrode may be improved.

In an embodiment of the present disclosure, the second binder polymer may include at least one of a polyolefin-based polymer or a polyvinylidene fluoride-based polymer.

For example, the second binder polymer may include polyethylene, polypropylene, polybutylene, polypentene, or two or more thereof. The polyvinylidene fluoride-based polymer may include polyvinylidene fluoride (PVDF), polyvinylidene fluoride-hexafluoropropylene (PVDF-HFP), polyvinylidene fluoride-trifluoroethylene (PVDF-TrFE), polyvinylidene fluoride-tetrafluoroethylene (PVDF-TFE), polyvinylidene fluoride-chlorofluoroethylene (PVDF-CTFE), polytetrafluoroethylene (PTFE), or two or more thereof.

In an embodiment of the present disclosure, the electrode active material layer may further comprise another binder polymer other than the first binder polymer and the second binder polymer. The binder polymer that may be further included in the electrode active material layer may include styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, a polyvinylidene fluoride-co-hexafluoropropylene copolymer, a polyvinylidene fluoride-co-trichloroethylene copolymer, polymethylmethacrylate, polyethylhexylacrylate, polybutylacrylate, polyacrylonitrile, polyvinylpyrrolidone, polyvinylacetate, polyethylene, polypropylene, a polyethylene-co-vinyl acetate copolymer, polyethylene oxide, polypropylene oxide, polyarylate, cyanoethylpullulan, cyanoethylpolyvinylalcohol, or two or more thereof. Specifically, the binder polymer may include styrene butadiene rubber (SBR), nitrile butadiene rubber (NBR), polymethylmethacrylate, polyethylhexylacrylate or polybutylacrylate. Additionally, the binder polymer may include one or two or more selected from them.

In an embodiment of the present disclosure, the tensile strength of the dry electrode may be 20 gf/mm² or more, 30 gf/mm² or more, 40 gf/mm² or more, or 50 gf/mm^{e} or more. In addition to the fibrillated first binder polymer, the second binder polymer is further included, but the second binder polymer has the above-described complex viscosity, so the dry electrode of the present disclosure may have sufficient tensile strength.

The tensile strength may be determined by preparing a dry electrode sheet sample 50 mm in width, 15 mm in length and 85 µm to 90 µm in thickness, securing the sample to a jig for tensile strength measurement, and measuring a stress value at the highest point on a stress-strain graph when pulling 180° at the speed of 2 mm/min at 25°C using a universal testing machine (LLOYD LS1, load cell 10 N).

In an embodiment of the present disclosure, the elastic indentation modulus of the dry electrode may be 2.5 GPa or more, 3.0 GPa or more, or 3.5 GPa or more.

In an embodiment of the present disclosure, the indentation hardness of the dry electrode may be 120 N/mm² or more, 130 N/mm² or more, 140 N/mm² or more, or 150 N/mm² or more.

The elastic indentation modulus and the indentation hardness may be measured using nano-indentation (NHT, Anton Paar, Austria) under the conditions of the maximum load range of 40 mN, the loading rate of 40 mN/min, the pause of 10 sec and the unloading rate of 40 mN/min.

A second aspect of the present disclosure relates to a secondary battery.

The secondary battery according to an aspect of the present disclosure comprises:
a positive electrode; a negative electrode; a separator positioned between the positive electrode and the negative electrode; and an electrolyte solution,
wherein at least one of the positive electrode and the negative electrode is the dry electrode according to an aspect of the present disclosure.

In an embodiment of the present disclosure, the secondary battery may include a lithium secondary battery. The lithium secondary battery may include a lithium metal secondary battery, a lithium ion secondary battery, a lithium polymer secondary battery or a lithium ion polymer secondary battery. The lithium secondary battery is not limited to a particular shape, but may have a cylindrical shape, a prismatic shape, a pouch shape or a coin shape using a can.

In an embodiment of the present disclosure, the negative electrode may include a negative electrode current collector; and a negative electrode active material layer disposed on at least one surface of the negative electrode current collector, and the negative electrode active material layer may comprise a negative electrode active material, a binder polymer and a conductive material.

The negative electrode active material layer may comprise graphite and a silicon-based compound as the negative electrode active material, and in this instance, the graphite and the silicon-based compound may be included at a weight ratio ranging from 70:30 to 99:1. Additionally, the silicon-based compound may include silicon and/or silicon oxide, and the silicon oxide may include at least one type of compound represented by the following Chemical Formula 1.

[Chemical Formula 1] SiOₓ

In the above Chemical Formula 1, 0≤x<2. In the above Chemical Formula 1, SiO₂ (x=2 in the above Chemical Formula 1) does not react with lithium ions, and cannot store lithium. Preferably, x is smaller than 2. Specifically, in terms of structural stability of the electrode active material, 0.5≤x≤1.5.

The silicon-based compound may further comprise a carbon coating layer covering all or at least a part of the active material particle surfaces. The carbon coating layer may act as a protective layer to suppress the volume expansion of the negative electrode active material particles comprising the silicon-based compound and prevent side reactions with the electrolyte solution. The carbon coating layer may be included in the silicon-based compound in an amount of 0.1 wt% to 10 wt%, and preferably 3 wt% to 7 wt%, and when the amount of the carbon coating layer falls within the aforementioned range, the carbon coating layer may control the volume expansion of the negative electrode active material particles comprising the silicon-based compound very effectively and prevent side reactions with the electrolyte solution.

The negative electrode active material particles comprising the silicon-based compound may have the particle size D₅₀ of 3 µm to 10 µm. When the particle size D₅₀ is smaller than 3 µm, high specific surface area may lead to larger reaction area with the electrolyte solution and more frequent side reactions with the electrolyte solution during charging and discharging, resulting in shorter battery life. In contrast, when the particle size D₅₀ is larger than 10 µm, large volume changes may be driven by volume expansion/contraction of the active material particles during charging and discharging, causing chipping or cracking of the active material particles, resulting in low battery performance.

The graphite may include at least one selected from artificial graphite and natural graphite. The natural graphite may include unprocessed natural graphite such as flake graphite, lump graphite or amorphous graphite, or spherical natural graphite. The flake graphite and the lump graphite exhibit nearly perfect crystals, and the amorphous graphite has lower crystallinity. When considering electrode capacity, flake graphite and lump graphite having higher crystallinity may be used. For example, flake graphite may be transformed into a spherical shape. The spherical natural graphite may have the particle size of 5 µm to 30 µm, and preferably 10 µm to 25 µm.

The artificial graphite is generally produced by a graphitization method involving firing raw materials such as coal tar, coal tar pitch and petroleum-based heavy oil at or above 2,500°C, and may be used as the negative electrode active material through particle size adjustment such as grinding and secondary particle formation after the graphitization.

In general, artificial graphite exhibits a random distribution of crystallites within particles, has lower sphericity than natural graphite, and possesses pointed shapes. The artificial graphite may be powdery, flaky, block-like, platy or rod-like in shape, but to improve output characteristics, the artificial graphite may preferably have isotropic crystallite orientation to reduce the movement distance of lithium ions. From this perspective, the artificial graphite may be flaky and/or platy.

The artificial graphite includes mesophase carbon microbeads (MCMB), mesophase pitch-based carbon fibers (MPCF), artificial graphite produced by graphitization into a block shape or artificial graphite produced by graphitization into a powder shape, widely used in commercial applications. In addition, the artificial graphite may have the particle size of 5 µm to 30 µm, and preferably 10 µm to 25 µm.

The specific surface area of the artificial graphite may be measured by the Brunauer-Emmett-Teller (BET) method. For example, the specific surface area of the artificial graphite may be measured by BET 6-point analysis by a nitrogen gas adsorption flow method using a porosimetry analyzer (Bell Japan Inc, Belsorp-II mini). This is equally applied to the specific surface area measurement of the natural graphite as described below.

The tap density of the artificial graphite may be 0.7 g/cc to 1.1 g/cc, and specifically 0.8 g/cc to 1.05 g/cc. When the tap density is less than 0.7 g/cc outside the aforementioned range, insufficient contact area between particles leads to poor adhesive properties and low capacity per volume, and when the tap density is more than 1.1 g/cc, electrode tortuosity decreases and electrolyte wettability is reduced, resulting in low output characteristics during charging and discharging.

Here, the tap density is determined by putting 50 g of precursor in a 100 cc tapping cylinder and tapping 3000 times using a COPLEY's JV-1000 measuring instrument and a SEISHIN (KYT-4000) measuring instrument. This is equally applied to the tap density measurement of the natural graphite as described below.

Furthermore, the average particle size D50 of the artificial graphite may be 8 µm to 30 µm, and specifically 12 µm to 25 µm. When the average particle size D50 of the artificial graphite is smaller than 8 µm, the specific surface area increases and the initial efficiency of the secondary battery decreases, resulting in low battery performance, and when the average particle size D50 is larger than 30 µm, adhesion strength is reduced and packing density decreases, resulting in low capacity.

The average particle size of the artificial graphite may be, for example, measured using a laser diffraction method. The laser diffraction method generally measures particle sizes from the submicron level to a few millimeters, and obtains the results with high reproducibility and high resolution. The average particle size D50 of the artificial graphite may be defined as a particle size at 50% of particle size distribution. For example, a method for measuring the average particle size D50 of the artificial graphite may include dispersing the artificial graphite in an ethanol/water solution, introducing it into a commercially available laser diffraction particle size measuring instrument (for example, Microtrac MT 3000), emitting ultrasonic waves at about 28 kHz with the output of 60 W, and calculating the average particle size D50 at 50% of particle size distribution in the measuring instrument.

The conductive material may include, for example, any one selected from the group consisting of graphite, carbon black, carbon nanotubes, carbon fibers or metal fibers, metal powder, conductive whiskers, conductive metal oxide, activated carbon and polyphenylene derivatives, or a mixture of two or more thereof. More specifically, the conductive material may include any one selected from the group consisting of natural graphite, artificial graphite, super-p, acetylene black, Ketjen black, channel black, furnace black, lamp black, thermal black, Denka black, aluminum powder, nickel powder, zinc oxide, potassium titanate and titanium oxide, or a mixture of two or more thereof.

The negative electrode current collector is not limited to a particular one and may include those having high conductivity without causing a chemical change in the corresponding battery, and for example, may include stainless steel, copper, aluminum, nickel, titanium, calcined carbon, copper, aluminum or stainless steel treated with carbon, nickel, titanium or silver on the surface. The thickness of the current collector is not limited to a particular range, but may generally range from 3 µm to 500 µm.

The binder polymer may include any polymer commonly used for the electrode in the technical field. Non-limiting examples of the binder polymer may include polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, a polyethylene-co-vinyl acetate copolymer, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan or carboxyl methyl cellulose, but is not limited thereto.

In an embodiment of the present disclosure, the separator may comprise a porous polymer substrate and a porous coating layer disposed on at least one surface of the porous polymer substrate.

The separator is not limited to a particular type and may include any type of separator used for the secondary battery. The separator may include any commonly used type of separator for electrochemical devices without limitation, so long as it has electrical insulating properties and provides pathways for ion conduction. For example, the separator may include a polymer-containing porous sheet such as a polymer film or non-woven fabric. In an embodiment of the present disclosure, the separator may further have a heat-resistant coating layer comprising inorganic particles on the surface of the porous sheet.

In an embodiment of the present disclosure, the electrolyte solution may comprise a salt having a structure of A⁺B⁻ and an organic solvent in which the salt dissolves or dissociates, wherein A⁺ may include an alkali metal cation such as Li⁺, Na⁺, K⁺ or a combination thereof, and B⁻ may include an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, and the organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (g-butyrolactone) or a mixture thereof, but is not limited thereto.

A third aspect of the present disclosure relates to a dry electrode manufacturing method.

The dry electrode manufacturing method according to an aspect of the present disclosure includes the steps of:
(S1) dry-mixing the electrode active material, the conductive material, the first binder polymer and the second binder polymer without a solvent to obtain a mixture;
(S2) kneading the mixture to form a mixture mass;
(S3) milling the mixture mass to obtain an electrode mixture powder;
(S4) feeding the electrode mixture powder between a plurality of rolls to perform calendering to manufacture an electrode sheet; and
(S5) laminating the electrode sheet on at least one surface of the electrode current collector to manufacture the electrode,

wherein the first binder polymer includes polytetrafluoroethylene, and
wherein the second binder polymer has the average particle size D90 of 50 µm or less.

Hereinafter, the dry electrode manufacturing method will be described in more detail.

To begin with, (S1) the step of dry-mixing the electrode active material, the conductive material, the first binder polymer and the second binder polymer without a solvent to obtain the mixture is performed.

The step (S1) includes mixing the components of the electrode sheet, i.e., the active material, the conductive material, the first binder polymer and the second binder polymer at a predetermined mix ratio to obtain the mixture.

In the step (S1), the mixing to obtain the mixture is performed for even distribution of the active material, the conductive material and the binder polymer, and because the components are mixed in powder form, any method for simply mixing may be used and the mixing method is not limited to a particular one. However, because the method is used to manufacture the solvent-free dry electrode, the mixing may be done by a dry mixing process, and may be performed by feeding the materials into a blender or a supermixer.

In an embodiment of the present disclosure, when the mixing is performed in a blender, to ensure uniformity, the mixing may be performed in the blender at 5,000 rpm to 20,000 rpm for 30 seconds to 20 minutes, and specifically at 10,000 rpm to 15,000 rpm for 30 seconds to 5 minutes.

In another embodiment of the present disclosure, when the mixing is performed in a supermixer, to ensure uniformity, the mixing may be performed in the supermixer at 500 rpm to 2,500 rpm, and specifically 1,000 rpm to 2,000 rpm, and the process time may be adjusted accordingly.

Subsequently, (S2) the step of kneading the mixture to form the mixture mass is performed.

The step (S2) includes forming the mixture mass with the solid content of 100% in which the active material particles and the conductive material particles are connected and held together by fibrillation of the first binder polymer.

The kneading is not limited to a particular method. In a specific embodiment of the present disclosure, the kneading may be, for example, performed using a kneader. Specifically, the kneading may be controlled to the speed of 10 rpm to 100 rpm. For example, the kneading may be controlled to the speed of 20 rpm or more, or 70 rpm or less within the aforementioned range. The kneading may be performed for 1 minute to 30 minutes. For example, the kneading may be performed for 3 minutes to 10 minutes at the speed of 40 rpm to 70 rpm within the aforementioned range. Meanwhile, the kneading may be controlled to the shear rate of 10/s to 500/s. In a specific embodiment of the present disclosure, the kneading may be performed for 1 to 30 minutes, and the shear rate may be controlled within a range of 30/s to 100/s.

In addition, the kneading step may be performed under high temperature and pressure conditions above atmospheric pressure, and more specifically, under pressure conditions higher than atmospheric pressure. More specifically, the kneading may be performed on the mixture in a range of 70°C to 200°C, specifically 90°C to 150°C. When the kneading is performed in the aforementioned temperature range, it may be possible to effectively form the mass by the fibrillation of the first binder polymer and the kneading.

Subsequently, (S3) the step of milling the mixture mass to obtain the electrode mixture powder is performed. The mixture mass formed through the kneading may undergo calendering immediately, but in this case, it may be necessary to press the mixture mass into a thin film shape, and as a result, the film density may be excessively high, or it may fail to obtain a film with uniform density. According to the present disclosure, the mixture mass undergoes the milling step.

In this instance, the milling step may be, for example, performed using a blender or a grinder but is not limited thereto, and specifically, the milling step may be performed at the speed of 5,000 rpm to 20,000 rpm for 30 seconds to 10 minutes, and more specifically at the speed of 10,000 rpm to 18,000 rpm for 30 seconds to 2 minutes.

Subsequently, (S4) the step of feeding the electrode mixture powder between the plurality of rolls to perform calendering to manufacture the electrode sheet is performed. The calendering may involve processing the electrode mixture powder into a film shape, and for example, may involve rolling the mixture into a film shape with the average thickness of 50 µm to 300 µm. The calendering may be, for example, performed by one or more pairs of opposing rolls, and the roll conditions may be controlled to the rotation speed of 5 rpm to 20 rpm at the temperature of 25°C to 250°C or 100°C to 200°C.

Subsequently, (S5) the step of laminating the electrode sheet on at least one surface of the electrode current collector to manufacture the electrode is performed. To form the electrode film on at least one surface of the current collector in the lamination step, the method may further comprise the step of rolling the electrode film to the predetermined thickness and attaching it to the current collector. The lamination may be performed by lamination rolls, and in this instance, the lamination rolls may be controlled to the temperature of 25°C to 250°C.

Hereinafter, the present disclosure will be described in more detail through examples, but the following examples are provided to describe the present disclosure for illustration purposes, and the scope of the present disclosure is not limited thereto.

### Example 1

96.5 parts by weight of lithium nickel-cobalt-manganese-aluminum oxide (NCMA, Li[Ni_{0.88}Co_{0.07}Mn_{0.04}]Al_{0.01}O₂) having an average particle size (D50) of 10 µm as a positive active material, 1.5 parts by weight of carbon black as a conductive material, 1.5 parts by weight of polytetrafluoroethylene (PTFE, Daikin, 601X) as a first binder polymer, and 0.5 parts by weight of polypropylene (LG Chem., H7918) as a second binder polymer were prepared.

The complex viscosity of the second binder polymer was 18 Pa·s when measured in the conditions of 170°C and 0.1 Hz using Advanced Rheometric Expansion system (ARES-G2), and D50 was 8 µm when measured.

Subsequently, the positive active material, the conductive material, the first binder polymer and the second binder polymer were fed into a blender and mixed at 10,000 rpm for 1 minute to prepare a mixture. The temperature of a kneader was stabilized up to 150°C, and the mixture was put into the kneader which in turn, operated at the speed of 25 rpm for 5 minutes under the cover pressure of 1.1 atm to obtain a mixture mass. The mixture mass was fed into a blender and milled at 10,000 rpm for 30 seconds to obtain an electrode mixture powder. The electrode mixture powder was separated into particle sizes of 150 µm or more and 1,000 µm or less in a multi-stage classifier. Subsequently, the screened electrode powder was fed into a lab calender (conditions: roll diameter 200 mm, roll temperature 100°C, roll speed ratio 1.5), and the calendering process was performed multiple times to manufacture an electrode sheet.

Two electrode sheets were placed on two surfaces of an aluminum foil (15.8 µm) coated with a conductive primer layer comprising a 5:6 (weight ratio) mixture of carbon black and an acrylic binder, and laminated through compression rolls kept at 150°C to manufacture a 81 µm-thick positive electrode.

### Example 2

A positive electrode was manufactured by the same method as Example 1, except that polypropylene (LG Chem., H7914) was prepared as the second binder polymer. The thickness of the positive electrode was 81 µm when measured.

The complex viscosity of the second binder polymer was 144 Pa·s when measured using Advanced Rheometric Expansion System (ARES-G2) under the conditions of 170°C and 0.1 Hz, and D50 was 8 µm when measured.

### Comparative Example 1

A positive electrode was manufactured by the same method as Example 1, except that the second binder polymer was not used, and 2 parts by weight of the first binder polymer was prepared. The thickness of the positive electrode was 81 µm when measured.

### Comparative Example 2

A positive electrode was manufactured by the same method as Example 1, except that the second binder polymer was not used, 97 parts by weight of the positive electrode active material was prepared, and 1.5 parts by weight of the first binder polymer was prepared. The thickness of the positive electrode was 80 µm when measured.

### Comparative Example 3

A positive electrode was manufactured by the same method as Example 1, except that polypropylene (LG Chem., M1500) was prepared as the second binder polymer. The second binder polymer had the average particle size (D50) of 8 µm and the complex viscosity of 1850 Pa·s when measured. The thickness of the positive electrode was 80 µm when measured.

### Comparative Example 4

A positive electrode was manufactured by the same method as Example 1, except that polypropylene (TIANSHI WAX, PPW-0901) was prepared as the second binder polymer. The second binder polymer had the average particle size (D50) of 6 µm and the complex viscosity of 0.2 Pa·s when measured. The thickness of the positive electrode was 80 µm when measured.

The thickness of the positive electrode was measured using a thickness gauge (VL-50S-B (Mitutoyo)).

### Experimental Example 1: Evaluation of positive electrode

**[TABLE 1]**

| | EX. 1 | EX. 2 | COM. EX. 1 | COM. EX. 2 | COM. EX. 3 | COM. EX. 4 |
|---|---|---|---|---|---|---|
| Tensile strength (gf/mm²) | 52 | 45 | 53 | 20 | 30 | 45 |
| Elastic indentation modulus (GPa) | 5.2 | 4.8 | 2.7 | 2.1 | 2.5 | 1.8 |
| Indentation hardness (N/mm²) | 151 | 137 | 117 | 111 | 113 | 104 |

The tensile strength may be determined by preparing the electrode sheet of each of Examples and Comparative Examples into a size of 50 mm (width) X 15 mm (length), securing it to a jig for tensile strength measurement, and measuring a stress value at the highest point on a stress-strain graph when pulling 180° at the speed of 2 mm/min at 25°C using a universal testing machine (LLOYD LS1, load cell 10N).

For each of the positive electrodes according to Examples and Comparative Examples prepared into a size of 50 mm (width) X 15 mm (length), the elastic indentation modulus and the indentation hardness may be measured using nano-indentation (NHT, Anton Paar, Austria) under the conditions of the maximum load range of 40 mN, the loading rate of 40 mN/min, the pause of 10 sec and the unloading rate of 40 mN/min.

Referring to TABLE 1, it was confirmed that the positive electrodes according to Examples 1 and 2 showed significant improvements in elastic indentation modulus and indentation hardness compared to the positive electrodes according to Comparative Examples 1 and 2 using the PTFE binder polymer alone.

Furthermore, it was confirmed that the positive electrode according to Example 1 showed significant improvements in elastic indentation modulus and indentation hardness compared to the positive electrodes according to Comparative Examples 3 and 4 using the second binder polymer having excessively high or low complex viscosity.

In addition to the fibrillated binder polymer, the positive electrodes according to Examples 1 and 2 further comprise the second binder polymer, but nevertheless, ensure sufficient tensile strength.

### Experimental Example 2: Evaluation of battery

A 5:5 mixture of artificial graphite and natural graphite as a negative electrode active material, superC as a conductive material and SBR/CMC as a binder were mixed at a weight ratio of 96:1:3 to prepare a negative electrode slurry, and the negative electrode slurry was applied to one surface of a copper current collector, dried at 130°C and rolled to the porosity of 26% to manufacture a negative electrode.

A porous polyethylene separator was placed between the as-prepared positive and negative electrodes of each of Examples and Comparative Examples to manufacture an electrode assembly, then the electrode assembly was placed in a case, and an electrolyte solution was injected into the case to manufacture a lithium secondary battery.

In this instance, the electrolyte solution used was prepared by dissolving 1.0 M lithium hexafluorophosphate (LiPF₆) in an organic solvent of ethylene carbonate/ethyl methyl carbonate/diethyl carbonate (mix volume ratio of EC/EMC/DEC = 3/4/3).

The as-prepared lithium secondary battery monocell was charged at 0.7C in CC-CV mode at 25°C up to 4.25V, and discharged at constant current of 0.5C up to 2.5V, and the initial capacity and capacity retention were measured over repeated charge and discharge cycles.

**[TABLE 2]**

| | EX. 1 | EX. 2 | COM. EX. 1 | COM. EX. 2 | COM. EX. 3 | COM. EX. 4 |
|---|---|---|---|---|---|---|
| Initial capacity (mAh/g) | 205 | 204 | 204 | 204 | 205 | 205 |
| Capacity retention (%) | 97 | 97 | 96 | 96 | 97 | 96 |

Referring to TABLE 2, it was confirmed that the secondary batteries with the positive electrodes according to Example 1 and Example 2 had sufficient initial capacity and capacity retention.

Although the present disclosure has been hereinabove described with respect to certain number of embodiments, the present disclosure is not limited thereto, and it is obvious to persons having ordinary skill in the technical field pertaining to the present disclosure to make various changes and modifications within the technical scope of the present disclosure and the appended claims and their equivalents.

## Claims

1. A dry electrode comprising:
an electrode current collector; and
an electrode active material layer disposed on at least one surface of the electrode current collector,
wherein the electrode active material layer comprises an electrode active material, a conductive material, a first binder polymer and a second binder polymer,
wherein the first binder polymer is a fibrillated polymer including polytetrafluoroethylene, and
wherein the second binder polymer has a complex viscosity of 1 Pa·s to 1500 Pa·s at 170°C and 0.1 Hz.

2. The dry electrode according to claim 1,
wherein the second binder polymer has the complex viscosity of 1 Pa·s to 1000 Pa·s at 170°C and 0.1 Hz.

3. The dry electrode according to claim 1,
wherein the second binder polymer has an average particle size D50 of 50 µm or less.

4. The dry electrode according to claim 1,
wherein the second binder polymer has an average particle size D50 of 0.1 µm to 50 µm.

5. The dry electrode according to claim 1,
wherein the second binder polymer has a melt index of 100 g/10 min or more under 2.16 kg load at 230°C.

6. The dry electrode according to claim 1,
wherein the first binder polymer and the second binder polymer are included in an amount of 1 to 5 parts by weight based on total 100 parts by weight of the electrode active material layer.

7. The dry electrode according to claim 1,
wherein a weight ratio of the first binder polymer to the second binder polymer is 6:1 to 2:1.

8. The dry electrode according to claim 1,
wherein the second binder polymer includes at least one of a polyolefin-based polymer or a polyvinylidene fluoride-based polymer.

9. The dry electrode according to claim 1,
wherein the second binder polymer includes polypropylene or polyvinylidene fluoride.

10. The dry electrode according to claim 1,
wherein the dry electrode has a tensile strength of 30 gf/mm² or more.

11. The dry electrode according to claim 1,
wherein the dry electrode has an elastic indentation modulus of 2.5 GPa or more.

12. A secondary battery comprising:
a positive electrode; a negative electrode; a separator positioned between the positive electrode and the negative electrode; and an electrolyte solution,
wherein at least one of the positive electrode and the negative electrode is the dry electrode according to any one of claims 1 to 11.

13. A dry electrode manufacturing method comprising:
(S1) dry-mixing an electrode active material, a conductive material, a first binder polymer and a second binder polymer without a solvent to obtain a mixture;
(S2) kneading the mixture to form a mixture mass;
(S3) milling the mixture mass to obtain an electrode mixture powder;
(S4) feeding the electrode mixture powder between a plurality of rolls to perform calendering to manufacture an electrode sheet; and
(S5) laminating the electrode sheet on at least one surface of an electrode current collector to manufacture an electrode,
wherein the first binder polymer includes polytetrafluoroethylene, and
wherein the second binder polymer has a complex viscosity of 1 Pa·s to 1500 Pa·s at 170°C and 0.1 Hz.
